**Europäisches Patentamt**

**European Patent Office**

**Office européen des brevets**

(19)

(11) **EP 0 741 627 B1**

(12) **EUROPÄISCHE PATENTSCHRIFT**

(45) Veröffentlichungstag und Bekanntmachung des Hinweises auf die Patenterteilung:
**22.10.1997 Patentblatt 1997/43**

(21) Anmeldenummer: **95905548.4**

(22) Anmeldetag: **18.01.1995**

(51) Int. Cl.$^6$: **B23K 26/14**

(86) Internationale Anmeldenummer:
**PCT/DE95/00050**

(87) Internationale Veröffentlichungsnummer:
**WO 95/19865 (27.07.1995 Gazette 1995/32)**

(54) **DÜSENANORDNUNG FÜR DAS LASERSTRAHLSCHNEIDEN**

NOZZLE ASSEMBLY FOR LASER BEAM CUTTING

ENSEMBLE BUSE POUR LE DECOUPAGE AU LASER

(84) Benannte Vertragsstaaten:
**AT BE CH DE DK ES FR GB GR IE IT LI NL PT SE**

(30) Priorität: **25.01.1994 DE 4402000**

(43) Veröffentlichungstag der Anmeldung:
**13.11.1996 Patentblatt 1996/46**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **ZEFFERER, Hartmut**
**D-52064 Aachen (DE)**
• **PETRING, Dirk**
**NL-6462 HE Kerkrade (NL)**

(74) Vertreter: **Eichler, Peter, Dipl.-Ing. et al**
**Patentanwälte**
**Dipl.-Ing. Peter Eichler,**
**Dipl.-Ing. Michael Füssel,**
**Brahmsstrasse 29**
**42289 Wuppertal (DE)**

(56) Entgegenhaltungen:
• **Patent Abstracts of Japan, Band 17, Nr 410(M-1455); & JP,A,0584589 (MITSUBISHI ELECTRIC CORP), 1993-04-06**

**Beschreibung**

Die Erfindung bezieht sich auf eine Düsenanordnung für das Laserstrahlschneiden, die einen dem fokussierten Laserstrahl angepaßten, diesen umgebenden kegelstumpfförmigen Düsenkörper mit einer Durchlaßbohrung für den Laserstrahl hat, mit einer den Düsenkörper konzentrisch umgebenden und damit einen Ringspalt bildenden Düsenhülse, die eine mit der Durchlaßbohrung gleichachsige Austrittsöffnung für einen Schneidgasstrahl des an eine Gasquelle angeschlossenen Ringspalts aufweist, wobei die Austrittsbohrung werkstückseitig vor der Durchlaßbohrung angeordnet und mit einem den Durchmesser der Durchlaßbohrung übersteigenden Durchmesser versehen ist.

Eine Düsenanordnung mit den vorgenannten Merkmalen ist aus JP 5-84589 A in: "Patents Abstracts of Japan" 1993, Vol.17/No.410, Sec. M-1455 bekannt. Die Wand der den Ringspalt bildenden Düsenhülse steht mehr als 0,5 bis 5mm über das Ende des Düsenkörpers vor, um eine perfekte Abschirmung gegen Umgebungsluft zu erreichen.

Aus der US 4 121 085 ist eine Düsenanordnung für das Laserstrahlschneiden bekannt, die einen dem fokussierten Laserstrahl angepaßten, diesen umgebenden kegelstumpfförmigen Düsenkörper mit einer Durchlaßbohrung für den Laserstrahl hat, mit einer den Düsenkörper konzentrisch mit Abstand umgebenden Düsenhülse, die eine mit der Durchlaßbohrung gleichachsige Austrittsöffnung für einen Schneidgasstrahl aufweist, die werkstückseitig vor der Durchlaßbohrung des Düsenkörpers angeordnet ist. Der Auslaßquerschnitt der Austrittsöffnung soll kleiner sein, als der Einlaßquerschnitt in den zwischen dem Düsenkörper und der Düsenhülse vorhandenen Raum. Auf diese Weise soll ein Gasrückstrom durch die Durchlaßbohrung erzeugt werden mit dem Ziel, die Luftzuführung zum Werkstück zu vermeiden. Der Querschnitt des Raums zwischen dem Düsenkörper und der Düsenhülse ist nicht strömungsmäßig optimiert.

Aus der DE 36 37 568 A1 ist eine Düsenanordnung für das Laserstrahlschneiden bekannt, die einen dem fokussierten Laserstrahl angepaßten, diesen umgebenden kegelstumpfförmigen Düsenkörper mit einer Durchlaßbohrung für den Laserstrahl hat, mit einer den Düsenkörper konzentrisch umgebenden und damit einen Ringspalt bildenden Düsenhülse, die eine mit der Durchlaßbohrung gleichachsige Austrittsöffnung für einen Schneidgasstrahl des an eine Gasquelle angeschlossenen Ringspalts aufweist. Bei dieser bekannten Düsenanordnung ist die Düsenhülse auf den Düsenkörper aufgeschraubt und am Hülseninnenmantel mit einzelnen, voneinander getrennten Längsnuten versehen. Wird die Hülse etwas abgeschraubt, so entsteht zwischen ihr und dem Düsenkörper ein konischer Ringspalt. Der Ringspalt umgibt die Durchlaßbohrung des Düsenkörpers mit einem Abstand, der durch die Wandstärke des Düsenkörpers im Bereich der Durchlaßbohrung bestimmt ist. Der austretende Schneidgasstrahl ist hohlzylindrisch. Diese bekannte Düsenordnung kann auch zum Schneiden eingesetzt werden, ist aber hierauf nicht spezialisiert und erzeugt wegen des hohlzylindrischen Brenngasstrahls einen vergleichsweise großen Schneidspalt.

Aus der DE 38 24 047 A1 ist eine Düsenanordnung mit einer Düsenhülse bekannt, die einen kegelstumpfförmigen Düsenkörper konzentrisch umgibt und eine Bohrung aufweist, die werkstückseitig vor der Durchlaßbohrung angeordnet ist. Mit Hilfe dieser Bohrung der bekannten Düsenanordnung wird ein Unterdruck auf der Werkstückoberfläche zur Wirkung gebracht, indem der Ringspalt zwischen Düsenhülse und Düsenkörper abgesaugt wird. Es findet eine erhebliche Strahlstörung im Bereich der Austrittsbohrung statt, so daß diese Düsenanordnung für das Laserstrahlschneiden insbesondere dann nicht geeignet ist, wenn das Schneiden mit hohen Leistungen und/oder hohen Schneidgasdrücken durchgeführt werden soll, also beispielsweise mit Laserleistungen von über 3 kW und Drücken von mehr als 10 bar.

Um Werkstücke mit hoher Arbeitsgeschwindigkeit schneiden zu können, ist es zum Ausblasen des Materials aus der Schneidfuge bekannt, ein Schneidgas zu verwenden, das mit hoher Geschwindigkeit zugeführt wird. Die Schneidgasgeschwindigkeit liegt im Überschallbereich. Aus der DE 36 30 127 A1 ist eine solche Düsenanordnung für das Laserstrahlschneiden bekannt, die einen dem fokussierten Laserstrahl angepaßten, diesen umgebenden kegelstumpfförmigen Düsenkörper mit einer Durchlaßbohrung für den Laserstrahl hat und die eine den Düsenkörper konzentrisch umgebende Düsenhülse aufweist, welche mit dem Düsenkörper mehrere an eine Gasquelle angeschlossene Gasströmungskanäle bildet, die werkstückseitig von der Durchlaßbohrung für den Laserstrahl in eine von dem Düsenkörper und von der Düsenhülse gemeinsam gebildete Vereinigungskammer münden, von der aus ein einziger Gasstrahl durch eine Austrittsbohrung bei entsprechender Bemessung des Drucks des Gases mit Überschallgeschwindigkeit ausströmt. Dabei ist eine wesentlich langsamer strömende Gashülle zum Schutz gegen das Mitreißen von Gas aus der umgebenden Atmosphäre vorhanden. Die Austrittsbohrung ist von einer mit der Düsenhülse verschraubten Schutzkappe gebildet, die beim Schneiden auftretende Verschmutzungen fernhalten soll. Bei der vorgenannten Düsenanordnung ist der Durchmesser der Austrittsbohrung kleiner, als der Durchmesser der Durchlaßbohrung für den Laserstrahl. Es ergibt sich eine Gasströmung, die im Hinblick auf Strömungsverluste und im Hinblick auf die Verläufe der Schneidgasströmung im Schneidspalt noch zu verbessern ist.

Der Erfindung liegt daher die Aufgabe zugrunde, eine Düsenanordnung mit den eingangs genannten Merkmalen so zu verbessern, daß der die Düse verlassende Gasstrahl mit möglichst minimalen Strömungsverlusten, nämlich Impuls- und Massestromverlusten, aus der Düsenmündung zum Werkstoff geführt wird.

Diese Aufgabe wird dadurch gelöst, daß der Austrittsquerschnitt der Austrittsbohrung etwa gleich dem Übergangsquerschnitt des Ringspalts zur Austrittsbohrung ist.

Für die Erfindung ist von Bedeutung, daß eine Strömungsoptimierung im Düsenauslaßbereich erfolgt. Im Austritt des konvergenten Spalts wird der durch den Ringspalt in Ringform vorliegende Gasstrahl in Richtung der Düsenachse parallel umgelenkt und strömt als geschlossener Freistrahl voll aus der Düsenmündung bzw. aus der Austrittsbohrung der Düse. Die Umlenkung des ringförmigen Strahls im Bereich der Düsenmündung erfolgt mit einem Minimum an Impulsverlusten, da es nicht zu einer Ausbildung von Verdichtungsstößen kommt. Erst außerhalb der Düsenmündung expandiert der Freistrahl in Richtung der Laserstrahlachse auf Überschallgeschwindigkeit.

Infolge der strömungsverlustarmen Umlenkung des Ringstrahls in die Austrittsbohrung wird auch erreicht, daß der Leck-Gasstrahl durch die Laserdurchgangsbohrung minimiert wird. Der geringe Leckgasstrahl verringert eine Beimischung von Umgebungsluft in den Gasstrahl.

Um zu erreichen, daß innerhalb der Düsenanordnung eine optimale Schneidgasströmung auftritt, deren Strömungsverluste also möglichst gering sind, wird die Düsenanordnung so ausgebildet, daß der Ringspalt und der Gasdruck derart bemessen sind, daß das Gas infolge der sich zur Austrittsbohrung hin verkleinernden Spaltquerschnittsfläche höchstens auf Schallgeschwindigkeit beschleunigt wird. Verdichtungsstöße können mit Sicherheit vermieden werden, so daß Strömungsverluste minimiert werden.

Eine weitere Verringerung von Strömungsverlusten läßt sich dadurch erreichen, daß der Übergangsquerschnitt des Ringspalts zur Austrittsbohrung durch eine Formgebung der Wand der Düsenhülse möglichst kontinuierlich verkleinert ist.

Um eine zutreffende Dimensionierung der Austrittsbohrung zu erreichen, wird die Düsenanordnung so ausgebildet, daß die Spaltweite des Ringspalts etwa wie folgt dimensioniert ist:

$$s = D/(2 \cos(\alpha_S)) * (1-(1-\cos(\alpha_S))^{0.5})$$

$s =$      Spaltweite
$D =$      Durchmesser der Austrittsbohrung
$\alpha_S =$      Neigungswinkel des Ringspalts.

Damit ergeben sich für die technische Umsetzung einfach anwendbare Konstruktionsrichtlinien.

Insbesondere bei höheren Schneidgeschwindigkeiten ist es wünschenswert, daß die Düse einen etwas größeren Abstand vom Werkstück hat. Dabei muß gewährleistet bleiben, daß der Gasstrahl sich nicht aufweitet und seine mechanische Wirkung im Schneidspalt beibehält. Um das zu erreichen, wird die Düsenanordnung so ausgebildet, daß die Austrittsbohrung den Schneidgasstrahl in eine Düsenausnehmung überleitet, deren Ausgestaltung den Strahl geführt auf Überschallgeschwindigkeit expandieren läßt.

Der Durchmesser der Durchlaßöffnung des Düsenkörpers sollte so klein wie möglich ausgebildet werden, damit eine Einflußnahme auf die Gasströmung vermieden wird, und damit die Leckverluste durch den Düseninnenraum klein gehalten werden können. Eine zweckmäßige Ausgestaltung der Düsenanordnung in dieser Hinsicht zeichnet sich dadurch aus, daß der Durchmesser der Durchlaßbohrung gleich oder größer dem 1,5-fachen des Laserstrahldurchmessers im Bereich der Durchlaßbohrung ist.

Düsenanordnungen werden hinsichtlich der den Laserstrahl fokussierenden Mittel unterschiedlich ausgebildet. Beim Einsatz von fokussierenden Linsen ist es erforderlich, die Düsenanordnung so auszugestalten, daß die Fokussierlinse und/oder ein den Laserstrahl transmittierendes Abschlußfenster durch den maximal möglichen Schneidgasdruck nicht zerstört werden. Wird die Düsenanordnung also in Verbindung mit einem solchen, den Laserstrahl durchlassenden Abschlußfenster versehen, so ist es sinnvoll, sie so auszubilden, daß der im Zutrittsbereich des Laserstrahls von einem transmittierenden Element abgeschlossene Innenraum des Düsenkörpers mit Druckentlastungsbohrungen versehen ist. Die Druckentlastungsbohrungen können insbesondere etwaige Druckspitzen abbauen, so daß das transmittierende Abschlußfenster bzw. die Fokussierlinse nicht beschädigt werden können.

Die Düsenanordnung kann so ausgebildet werden, daß der im Zutrittsbereich des Laserstrahls von einem transmittierenden Element abgeschlossene Innenraum des Düsenkörpers an eine Gasquelle angeschlossen ist. Dabei wird der Innenraum des Düsenkörpers in herkömmlicher Weise mit Gas beaufschlagt, das durch die Durchlaßbohrung für den Laserstrahl ausströmt und zentral im Gas des Ringspalts weiterströmt.

Die Düsenanordnung kann so weitergebildet werden, daß die kegelstumpfförmige Düsenhülse von einer damit einen weiteren koaxialen Ringspalt bildenden äußeren Hülse umgeben ist, und daß die beiden Ringspalte an dieselbe oder an unterschiedliche Fluidquellen angeschlossen sind. Diese Ausgestaltung ist insbesondere für Düsenanordnungen geeignet, die in Verbindung mit einer Spiegeloptik eingesetzt werden. Bei Anschluß der beiden Ringspalte an dieselbe Gasquelle kann der resultierende Schneidgasstrahl mit über den Querschnitt unterschiedlichen Druck- und/oder Durchflußverhältnissen ausgebildet werden. Bei Anschluß der beiden Ringspalte an unterschiedliche Gasquellen ergeben sich entsprechende Druck- und/oder Durchflußverhältnisse der zusammengeführten unterschiedlichen Einzelstrahlen. In Sonderfällen kann anstelle eines Gases auch eine Flüssigkeit als Fluid eingesetzt werden.

Die vorbeschriebene Düsenanordnung kann dadurch weitergebildet werden, daß der weitere Ringspalt in die Austrittsbohrung mündet oder eine davon separate, die Austrittbohrung mit Abstand umgebende Spaltmündung hat. Im ersten Fall wird das außen zuströmende Fluid Bestandteil des zentralen Gasstrahls, wobei über die Ausbildung der Mündung des weiteren Ringspalts Einfluß auf die Formung des Gasstrahls genommen werden kann. Im zweiten Fall ergibt sich ein separater Strahl, der beispielsweise eingesetzt wird, um Werkstückbereiche um den Schneidstrahl herum zu beeinflussen, z.B. abzuschirmen.

Ein Zusatzgasstrahl hat häufig ganz unterschiedlichen Anforderungen zu entsprechen. Beispielsweise kann es sein, daß der Gasverbrauch gering sein soll. Für diesen Fall ist es zweckmäßig, die Düsenanordnung so auszugestalten, daß ein Ringspalt zur Ausbildung eines Zusatzgasstrahls an eine Bohrung angeschlossen ist, die neben der Austrittsbohrung mündet. Diese Bohrung ist vorzugsweise düsenachsparallel.

Für ähnliche Sonderzwecke kann die Düsenanordnung auch so gestaltet sein, daß die Düsenhülse einen vom Ringspalt ausgehenden vertikalen Schlitz hat, in den die Austrittsbohrung integriert ist.

Die Erfindung wird anhand von in der Zeichnung dargestellten Ausführungsbeispielen erläutert. Es zeigen:

Fig.1      einen schematischen Querschnitt einer Düsenanordnung zur Erläuterung ihrer grundsätzlichen Bestandteile,

Fig.2a-d      die Einzelheit Z der Fig.1 in unterschiedlichen Ausgestaltungen,

Fig.3,4      Einsatzvarianten der Düsenanordnung gemäß Fig.1 mit und ohne transmittierendem Abschlußfenster,

Fig.5,6      unterschiedliche Ausbildungen der Düsenanordnung zu radialen und axialen Mischung unterschiedlicher Gase,

Fig.7,8      unterschiedliche Ausbildungen der Düsenanordnung zur Erzeugung konzentrischer Zusatzstrahlen, und

Fig.9,10      unterschiedliche Ausgestaltungen einer Düanordnung mit nichtkonzentrischen Zusatzgasstrahlen.

Die erfindungsgemäße Düsenanordnung 34 besteht im wesentlichen aus eine Düsenkörper 10, der einen Innenraum 16 hat, welcher dem nicht dargestellten fokussierten Laserstrahl entsprechend angepaßt ist, sich also dem fokussierten Laserstrahl entsprechend verjüngt. Am in der Darstellung unteren, werkstückseitigen Ende des Düsenkörpers 10 ist eine Durchlaßbohrung 11 für den Laserstrahl vorhanden. Der Durchmesser d dieser Durchlaßbohrung 11 sollte so klein wie möglich ausgelegt werden und orientiert sich am Durchmesser des fokussierten Laserstrahl $d_L$ an dieser Stelle. Als Faustformel gilt etwa: $d > 1{,}5 \times d_L$.

Der Düsenkörper 10 ist von einer Düsenhülse 13 umgeben, die einen komplexen Aufbau hat. Im Bereich des unteren Endes des Düsenkörpers 10 ist die Düsenhülse 13 ähnlich kegelstumpfförmig ausgebildet, wie der Düsenkörper 10. Sie hat jedoch einen geringen Abstand zum Außenumfang 10' des Düsenkörpers 10, so daß ein Ringspalt 12 gebildet wird. Dieser Ringspalt 12 erstreckt sich von einem mit einem Gaseinlaß 25 verbundenen Kesselraum 23 bis zu einer Düsenmündung 26, wo eine Austrittsbohrung 14 in der Düsenhülse 13 vorhanden ist. Es ergibt sich eine durchgehend strömungsmäßige Verbindung zwischen dem Gaseinlaß 25 und der Düsenmündung 26. Der Kesselraum 23 ist ein den Düsenkörper 10 umgebender Ringraum, an den außer dem Gaseinlaß auch eine Anschlußbohrung 27 für eine Druckmessung angeschlossen ist. Infolgedessen kann eine Schneidgaszufuhr durch den Gaseinlaß 25 in Abhängigkeit von einer Druckmessung so durchgeführt werden, daß der sich düsenintern aufbauende Arbeitsgasdruck einen vorbestimmten Wert erreicht bzw. nicht überschreitet und nicht unterschreitet. Der Aufbau des Arbeitsgasdrucks erfolgt wegen des sich von Kesselraum 23 bis zur Düsenmündung 26 verringernden Strömungsquerschnitts des Ringspalts 12. In diesem wird das Schneidgas bis höchstens auf Schallgeschwindigkeit beschleunigt.

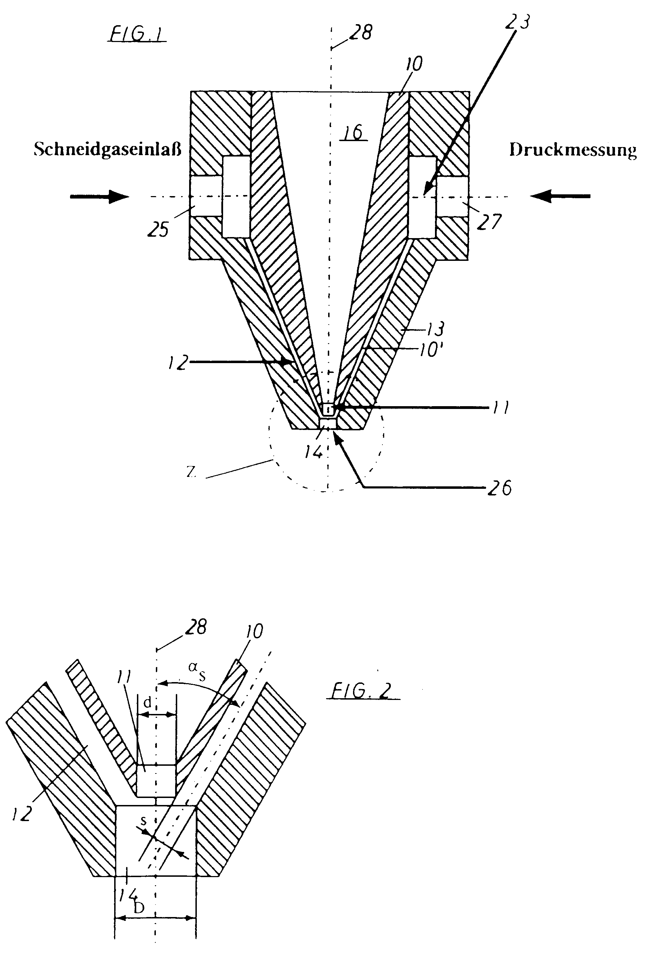

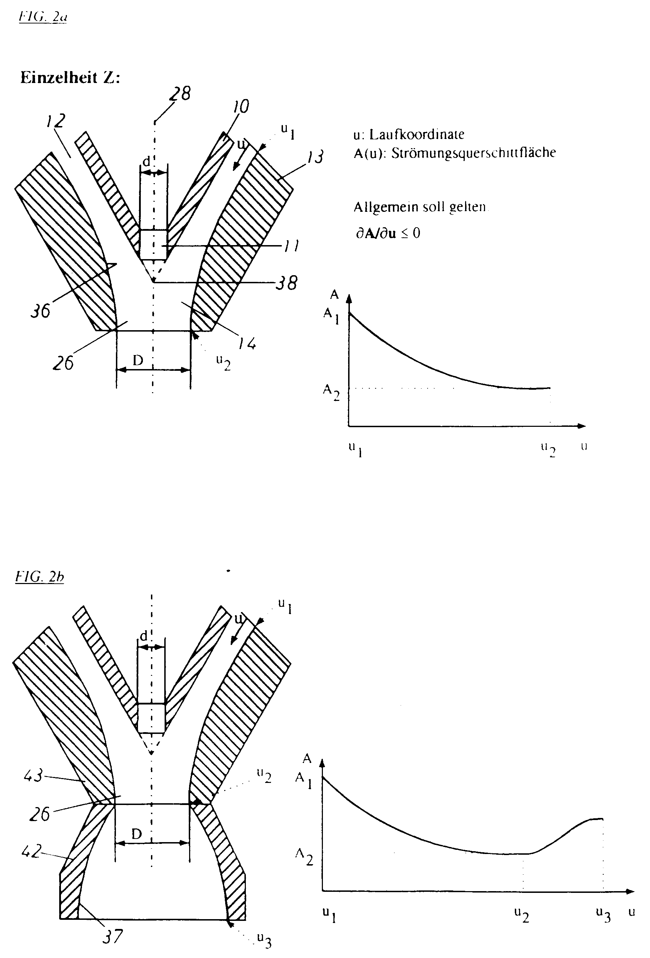

Die in den Figuren 2a bis 2d in unterschiedlichen Ausgestaltungen dargestellte Einzelheit Z der Fig.1 betrifft hauptsächlich die Gestaltung des Übergangs des Strömungsquerschnitts des Ringspalts 12 zum Strömungsquerschnitt der Austrittsbohrung 14. Der Übergangsquerschnitt wird in Fig.2a dadurch bestimmt, daß der Düsenkörper 10 in Kegelstumpfform ausgebildet ist, während die Düsenhülse 13 außen ebenfalls kegelstumpfförmig ist, innen aber eine Formgebung der Wand 36 aufweist, die im wesentlichen bogentrichterförmig und im Übergangsbereich zwischen Ringspalt 12 und Düsenmündung 26 kontinuierlich gekrümmt ist, so daR eine umlaufende Kante nicht auftritt. Dementsprechend wird der Übergangsquerschnitt kontinuierlich verkleinert, wie sich aus dem der Fig.2a nebenstehenden Diagramm ablesen läßt, in dem die Strömungsquerschnittsfläche A in Abhängigkeit von der Laufkoordinate u dargestellt ist. Bei der Laufkoordinate $u_1$ ist eine Strömungsquerschnittsfläche $A_1$ vorhanden, die größer ist, als eine Strömungsquerschnittsfläche $A_2$ bei der Laufkoordinate $u_2$ an der Düsenmündung 26. Das Diagrammm stellt die gewünschte kontinuierliche Verkleinerung des Übergangsquerschnitts dar. Dabei wurde angenommen, daß die Mantelfläche des Düsenkörpers 10 bis zur Kegelspitze 38 komplett vorhanden ist, eine effektive Störung durch die dargestellte Durchlaßbohrung 11 also nicht stattfindet. Es ist ersichtlich, daß sich die Strömungsquerschnittsfläche zur Düsenmündung 26 hin sprunglos verkleinert.

In den Figuren 2c,d sind die Durchlaßbohrung 11 und die Austrittsbohrung 14 jeweils in zylindrischer Ausbildung dargestellt. Diese Ausgestaltungen sind am einfachsten herzustellen. Die Weite des Ringspalts 12 ist bis zur zylindrischen Austrittsbohrung 14 konstant. Durch Vergleich der Figuren 2c und 2d ist erkennbar, daß die äußere Mantelfläche des Düsenkörpers 10 jeweils gleich ist und gleich liegt. Der Übergangsquerschnitt vom Ringspalt 12 zur Austrittsbohrung 14 ergibt sich hier definitionsgemäß an der Umlaufkante 39 der Düsenhülse 13 und liegt senkrecht zur äußeren Mantelfläche des Düsenkörpers 10. Der Übergangsquerschnitt wurde in den Figuren 2c,2d mit 40 bezeichnet. Durch Vergleich der Figuren 2c,2d ist des weiteren ersichtlich, daß die Unterkante 41 des Düsenkörpers 10 umso näher an der Umlaufkante 39 liegt, je kleiner der Durchmesser d der Durchtrittsbohrung 11 ist. Je kleiner der Durchmesser d ist, desto relativ tiefer taucht der Düsenkörper 10 bei ungeänderter Lage seiner Mantelfläche in Richtung Austrittsbohrung 14 ein.

Darüberhinaus ist aber in erster Linie von Bedeutung, daß der Durchmesser D der Austrittsbohrung 14 größer ist, als der Durchmesser d der Durchlaßbohrung 11 für den Laserstrahl. Außerdem ist die Spaltweite s gemäß Fig.2 von Bedeutung. Alle genannten Größen müssen so miteinander verknüpft werden, daß der durch den Ringspalt 12 geformte ringförmige Gasstrahl möglichst verlustfrei in Richtung der Laserstrahlachse 28 umgelenkt wird. Dabei wird von folgender Beziehung ausgegangen:

$$A_D = \pi D^2/4$$

Des weiteren gilt:

$$A_S = \pi s(D - s \cos(\alpha_S))$$

D = Durchmesser der Austrittsbohrung 14
d = Durchmesser der Durchlaßbohrung 11 für den Laserstrahl
s = Spaltweite
$\alpha_S$ = Neigungswinkel des Spaltes
$A_S$ = Austrittsfläche des Spaltes
$A_D$ = Austrittsfläche der Austrittsbohrung 14.

Wenn man nun davon ausgeht, daß es für ein möglichst verlustfreies Strömungsverhalten des Gasstrahls von Bedeutung ist, daß $A_S$ etwa gleich $A_D$ ist, so folgt aus den beiden vorgenannten Gleichungen:

$$s = D/(2 \cos(\alpha_S)) \ast (1 - (1 - \cos(\alpha_S))^{0.5})$$

Der Durchmesser der Austrittsbohrung 14 liegt üblicherweise bei 2 mm. Der Winkel $\alpha_S$ sollte möglichst spitz ausgeführt werden. Da jedoch die Form des fokussierten Laserstrahls den Winkel $\alpha_S$ begrenzt, muß üblicher Weise ein Winkel in der Größenordnung von $\alpha_S$ = 30° zugestanden werden. Daraus ergibt sich die erforderliche Spaltweite mit s = 0,73 mm.

Fig.2b entspricht in der Darstellung der Düsenmündung 26 der Darstellung in Fig.2a, läßt jedoch eine Düsenkrone 42 erkennen, die an der Düsenspitze 43 vorgesehen ist. Die Befestigung der Düsenkrone 42 an der Düsenspitze 43 erfolgt z.B. durch Fügen. Auch eine einstückige Ausbildung ist möglich. Wesentlich ist eine Düsenausnehmung 37, die den Schneidgasstrahl von der Austrittsbohrung 14 an geführt auf Überschallgeschwindigkeit expandieren läßt. Das ist z.B. bei Anwendungen von Vorteil, bei denen der Schneidgasstrahl über eine längere Strecke zwischen dem Bearbeitungskopf und dem Werkstück konstante Eigenschaften behalten soll. Er soll sich also insbesondere nicht aufweiten und im Schneidspalt die gewünschten mechanischen Eigenschaften beim Ausblasen des verbrannten Werkstoffs entfalten. Das der Fig.2b nebengeordnete Diagramm stellt die Abhängigkeit der Strömungsquerschnittfläche A von der Laufkoordinate u innerhalb der Düsenkrone 42 dar, wobei das Anwachsen der Querschnittsfläche außerhalb des Bereichs Düsenmündung 26 ersichtlich ist.

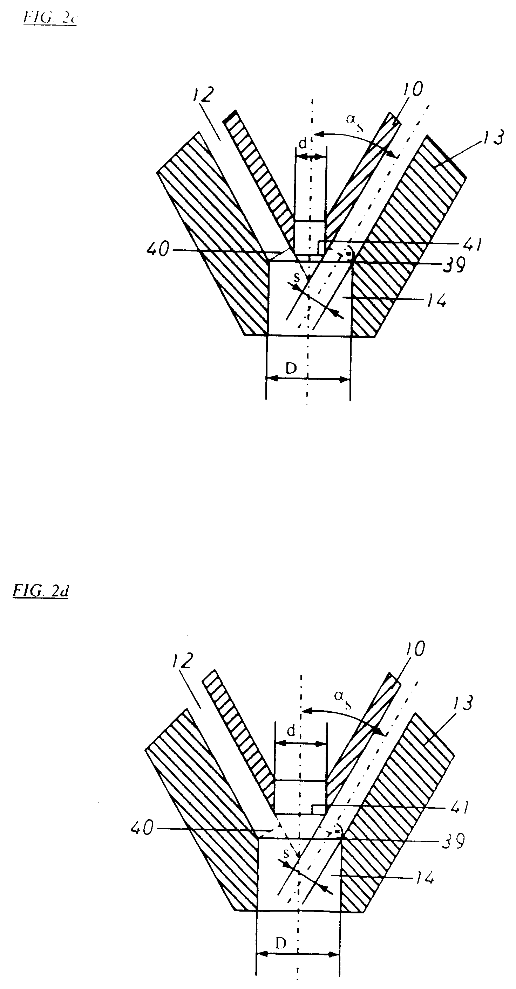

Die vorbeschriebenen Grundausbildungen der Düse lassen sich vorteilhaft in unterschiedlichen Konfigurationen anwenden. Fig.3 zeigt eine Düsenanordnung, die in Verbindung mit einer Düsenhalterung 29 zusammen mit einer Spiegeloptik 35 eingesetzt wird, die den Laserstrahl der gestrichelten bzw. der strichpunktierten Linie entsprechend führt. Die strichpunktierte Linie betrifft die Laserstrahlachse 28 des fokussierten Laserstrahls, der durch die Düsenanordnung 34 bzw. durch den Düsenkörper 10 auf das zu schneidende Werkstück gerichtet wird.

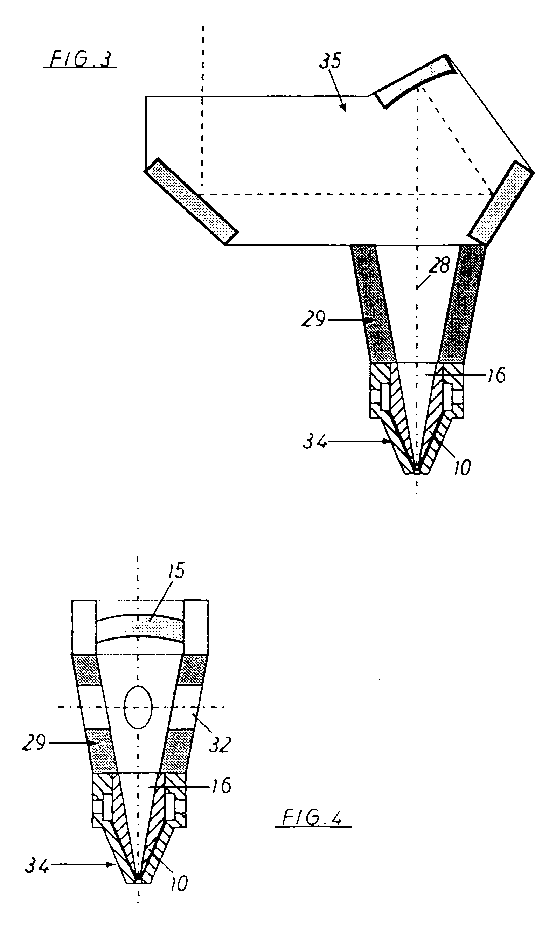

In Fig.4 wird der Laserstrahl mit einem transmittierenden Element 15, nämlich einer Linse fokussiert, die den Innenraum 16 des Düsenkörpers 10 nach oben abschließt. Es wird ein Schneidgasstrahl mit einem Ruhedruck ausgebildet, der unabhängig von der mechanischen Zerstörschwelle des transmittierenden Elements 15 ist. Zur Druckentlastung des transmittierenden Elements bzw. der Linse 15 können Druckentlastungsbohrungen 32 vorhanden sein.

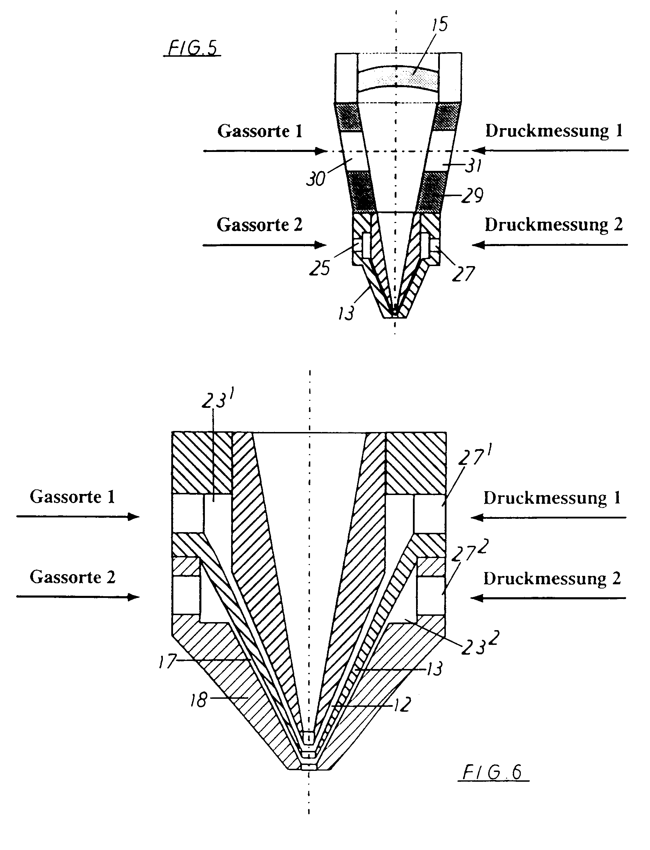

Für einige Schneidanwendungen kann es notwendig sein, im Zentrum des Gasstrahls eine andere Gasart einzustellen, als am Rand des Gasstrahls. Das ist z.B. beim Brennschneiden von Vorteil, wenn in der Nähe der Gasstrahlmitte, die mit der Laserstrahlachse zusammenfällt, zur Verbesserung der Energieeinkopplung reiner Sauerstoff eingesetzt wird, während am Rand des Gasstrahls ein den Oxidationsprozeß hemmendes Gas, wie Stickstoff oder ein Fluid, wie Wasser eingesetzt wird. Eine radiale Mischung oder Schichtung kann dadurch erreicht werden, daß ein Gas oder ein Gasgemisch zentral zugeführt wird, und zwar durch den Innenraum 16 des Düsenkörpers 10, durch den auch der fokussierte Laserstrahl geschickt wird. Die zweite Komponente des Gasstrahls wird durch den Ringspalt 12 zugeführt, so daß sich der gewünschte zusammenhängende, aber radial und axial unterschiedlich durchmischte Gasstrahl ergibt. Die Dosierung der Durchmischung erfolgt über das Druck- und/oder Durchflußverhältnis der zusammengeführten einzelnen Gasströme. Zusätzlich kann die Dosierung bzw. der Durchfluß durch eine mechanische Verstellung des Spalts im Sinne einer Änderung der Spaltweite eingestellt werden. Für die zentrale Zuführung von Gas ist ein transmittierendes Abschlußelement 15 erforderlich, wie es in Fig.5 dargestellt wurde. Durch die Bohrung 30 der Düsenhalterung 29 erfolgt die Gaszufuhr der Gassorte 1 und die Bohrung 31 dient der Druckmessung 1 dieses Gases. Die zweite Gassorte wird hingegen durch den Gaseinlaß 25 der Hülse 13 vorgenommen, an deren Bohrung 27 die zugehörige zweite Druckmessung erfolgt.

Ist ein transmittierendes Abschlußelement 15 gemäß Fig.5 nicht realisierbar, kann gemäß Fig.6 eine Düse eingesetzt werden, die außer der Düsenhülse 13 eine diese umgebende weitere äußere Hülse 18 hat, die mit dem Außenumfang der Hülse 13 einen weiteren koaxialen Ringspalt 17 einschließt. Während der innere Ringspalt 12 an den Kesselraum $23^1$ angeschlossen ist, steht der äußere Ringspalt 17 mit einem weiteren Kesselraum $23^2$ in Verbindung, die jeweils einen separaten Gaseinlaß für die beiden Gassorten aufweisen und jeweils auch einen Anschluß $27^1$ und $27^2$ zur Druckmessung haben.

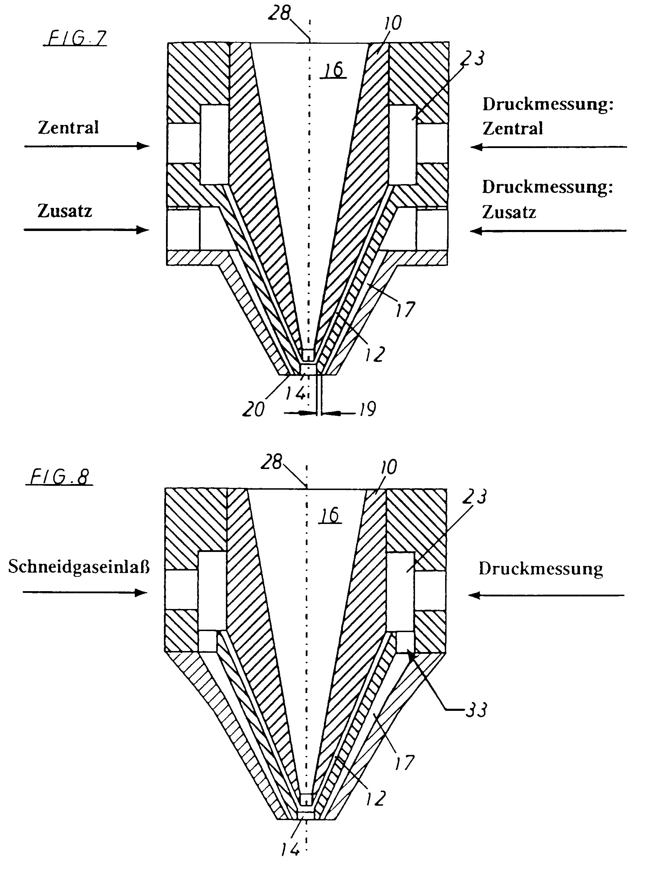

Die beiden Gassorten werden der Ausbildung der Düsenmündung entsprechend zusammengeführt. Gemäß Fig.6 mündet der äußere Ringspalt 17 in die Austrittsbohrung 14. Demgegenüber zeigt Fig.7, daß der weitere Ringspalt 17 eine Spaltmündung 20 aufweist, die Abstand 19 von der Austrittsbohrung 14 hat und letztere also mit diesem Abstand 19 umgibt. Eine dementsprechende Ausbildung von getrennten konzentrischen Gasstrahlen ist zu erwarten.

Eine gleichermaßen konzentrische Ausbildung voneinander getrennter Gasstrahlen ist bei einer Ausgestaltung der Düse gemäß Fig.8 zu erwarten. Diese weist jedoch die Besonderheit auf, daß beide Ringspalte 12,17 an denselben Kesselraum 23 angeschlossen sind, wobei der Ringspalt 17 über den Umfang verteilte Versorgungsbohrungen 33 hat.

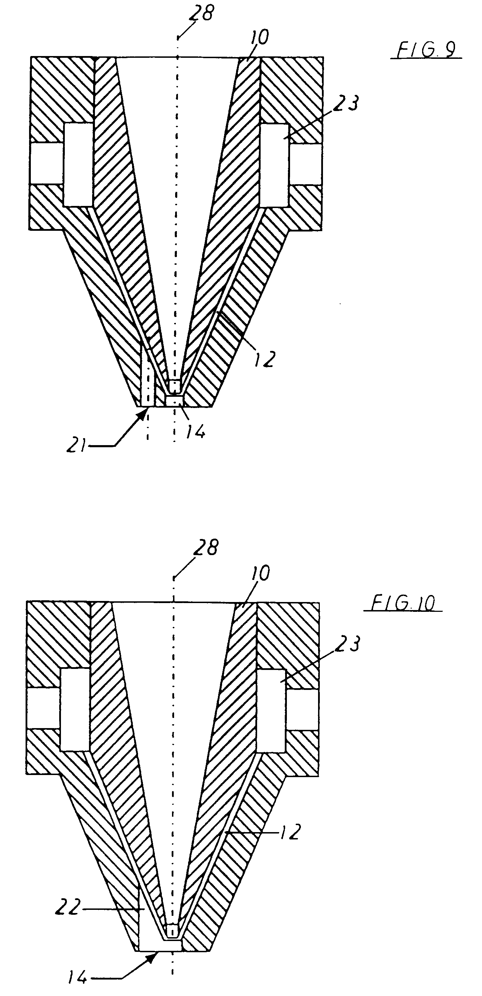

Es versteht sich, daß eine Düsenanordhung gemäß Fig.8 einen vergleichsweise großen Verbrauch an Gas durch den äußeren beabstandeten Zusatzgasstrahl hat. Wenn dieser Gasverbrauch reduziert werden soll, kann eine Düsenanordnung gemäß Fig.9 zum Einsatz kommen, bei der der Ringspalt 12 nicht nur die Austrittsbohrung 14 speist, sondern auch eine Bohrung 21, die parallel zur Strahlachse 28 mit Abstand angeordnet ist und dementsprechend einen zweiten Strahl vergleichbar großen Querschnitts erzeugt.

Es ist möglich, den Zusatzgasstrahl so auszugestalten, daß er sowohl mit Abstand von der Laserstrahlachse 28 vorhanden ist, als auch mit dem Gasstrahl der Austrittsbohrung 14 in Verbindung steht. Zu diesem Zweck wird die Düsenhülse 13 mit einem vom Ringspalt 12 ausgehenden vertikalen Schlitz 22 mit einer langlochartigen Mündung versehen, in die die Austrittsbohrung 14 integriert ist. Das wird in Fig.10 dargestellt.

## Patentansprüche

1. Düsenanordnung (34) für das Laserstrahlschneiden, die einen dem fokussierten Laserstrahl angepaßten, diesen umgebenden kegelstumpfförmigen Düsenkörper (10) mit einer Durchlaßbohrung (11) für den Laserstrahl hat, mit einer den Düsenkörper (10) konzentrisch umgebenden und damit einen Ringspalt (12) bildenden Düsenhülse (13), die eine mit der Durchlaßbohrung (11) gleichachsige Austrittsbohrung (14) für einen Schneidgasstrahl des an eine Gasquelle angeschlossenen Ringspalts (12) aufweist, wobei die Austrittsbohrung (14) werkstückseitig vor der Durchlaßbohrung (11) angeordnet und mit einem den Durchmesser (d) der Durchlaßbohrung (11) übersteigenden Durchmesser (D) versehen ist, **dadurch gekennzeichnet**, daß der Austrittsquerschnitt der Austrittsbohrung (14) etwa gleich dem Übergangsquerschnitt des Ringspalts (12) zur Austrittsbohrung (14) ist.

2. Düsenanordnung nach Anspruch 1, **dadurch gekennzeichnet**, daß der Ringspalt (12) und der Gasdruck derart bemessen sind, daß das Gas infolge der sich zur Austrittsbohrung (14) hin verkleinernden Spaltquerschnittsfläche höchstens auf Schallgeschwindigkeit beschleunigt wird.

3. Düsenanordnung nach Anspruch 1 oder 2, **dadurch gekennzeichnet**, daß der Übergangsquerschnitt des Ringspalts (12) zur Austrittsbohrung (14) durch eine Formgebung der Wand (36) der Düsenhülse (13) möglichst kontinuierlich verkleinert ist.

4. Düsenanordnung nach einem der Ansprüche 1 bis 3, **dadurch gekennzeichnet**, daß die Spaltweite (s) des Ringspalts (12) wie folgt dimensioniert ist:

$$s = D/(2\cos(\alpha_S))*(1-(1-\cos(\alpha_S))^{0.5})$$

s = Spaltweite
D = Durchmesser der Austrittsbohrung
$\alpha_S$ = Neigungswinkel des Ringspalts

5. Düsenanordnung nach einem der Ansprüche 1 bis 4, **dadurch gekennzeichnet**, daß die Austrittsbohrung (14) den Schneidgasstrahl in eine Düsenausnehmung (37) überleitet, deren Ausgestaltung den Strahl geführt auf Überschallgeschwindigkeit expandieren läßt.

6. Düsenanordnung nach einem der Ansprüche 1 bis 5, **dadurch gekennzeichnet**, daß der Durchmesser (d) der Durchlaßbohrung (11) gleich oder größer dem 1,5-fachen des Laserstrahldurchmessers im Bereich der Durchlaßbohrung (11) ist.

7. Düsenanordnung nach einem der Ansprüche 1 bis 6, **dadurch gekennzeichnet**, daß der im Zutrittsbereich des Laserstrahls von einem transmittierenden Element (15) abgeschlossene Innenraum (16) des Düsenkörpers (10) mit Druckentlastungsbohrungen (32) versehen ist.

**8.** Düsenanordnung nach einem der Ansprüche 1 bis 7, **dadurch gekennzeichnet**, daß der im Zutrittsbereich des Laserstrahls von einem transmittierenden Elements (15) abgeschlossene Innenraum (16) des Düsenkörpers (10) an eine Gasquelle angeschlossen ist.

**9.** Düsenanordnung nach einem der Ansprüche 1 bis 8, **dadurch gekennzeichnet**, daß die kegelstumpfförmige Düsenhülse (13) von einer damit einen weiteren koaxialen Ringspalt (17) bildenden äußeren Hülse (18) umgeben ist, und daß die beiden Ringspalte (12,17) an dieselbe oder an unterschiedliche Fluidquellen angeschlossen sind.

**10.** Düsenanordnung nach Anspruch 9, **dadurch gekennzeichnet**, daß der weitere Ringspalt (12) in die Austrittsbohrung (14) mündet oder eine davon separate, die Austrittsbohrung (14) mit Abstand (19) umgebende Spaltmündung (20) hat.

**11.** Düsenanordnung nach einem der Ansprüche 1 bis 10, **dadurch gekennzeichnet**, daß ein Ringspalt (17) zur Ausbildung eines Zusatzgasstrahls an eine Bohrung (21) angeschlossen ist, die neben der Austrittsbohrung (14) mündet.

**12.** Düsenanordnung nach einem der Ansprüche 1 bis 11, **dadurch gekennzeichnet**, daß die Düsenhülse (13) einen vom Ringspalt (12) ausgehenden vertikalen Schlitz (22) hat, in den die Austrittsbohrung (14) integriert ist.

**Claims**

**1.** Nozzle assembly (34) for laser beam cutting, which includes a frusto-conical nozzle body (10) which is matched to the focused laser beam and which encircles this and which has a through bore (11) for the laser beam, with a nozzle sleeve (13) concentrically encircling the nozzle body (10) and forming an annular gap (12) therewith, said nozzle sleeve including an outlet bore (14) coaxial with the through bore (11) for a stream of cutting gas from the annular gap (12) connected to a source of gas, in which the outlet bore (14) is arranged in front of the through bore (11) on the workpiece side and has a diameter (D) which exceeds the diameter (d) of the through bore (11), **characterised in that** the outlet cross-section of the outlet bore (14) is approximately the same as the transition cross-section of the annular gap (12) to the outlet bore (14).

**2.** Nozzle assembly according to claim 1, **characterised in that** the annular gap (12) and the gas pressure are dimensioned such that the gas is accelerated at the maximum to the speed of sound as a consequence of the gap cross-section surface area decreasing towards the outlet bore (14).

**3.** Nozzle assembly according to claim 1 or 2, **characterised in that** the transition cross-section of the annular gap (12) to the outlet bore (14) decreases as far as possible continuously by a shaping of the wall (36) of the nozzle sleeve (13).

**4.** Nozzle assembly according to one of claims 1 to 3, **characterised in that** the gap width (s) of the annular gap (12) is dimensioned as follows:

$$s = D/(2 \cos(\alpha_s))*(1-(1-\cos(\alpha_s))^{0.5})$$

s =     gap width
D =     diameter of the outlet bore
$\alpha_s$ =     angle of slope of the annular gap

**5.** Nozzle assembly according to one of claims 1 to 4, **characterised in that** the outlet bore (14) conducts the stream of cutting gas into a nozzle recess (37) whose configuration permits the guided gas to expand to supersonic speed.

**6.** Nozzle assembly according to one of claims 1 to 5, **characterised in that** the diameter (d) of the through bore (11) is equal to or greater than 1.5 times the laser beam diameter in the region of the through bore (11).

**7.** Nozzle assembly according to one of claims 1 to 6, **characterised in that** the internal chamber (16) of the nozzle body (10) closed off at the entry zone of the laser beam by a transmitting element (15) is provided with pressure-relieving bores (32).

**8.** Nozzle assembly according to one of claims 1 to 7, **characterised in that** the internal chamber (16) of the nozzle body (10) closed off at the entry zone of the laser beam by a transmitting element (15) is connected to a source of gas.

**9.** Nozzle assembly according to one of claims 1 to 8, **characterised in that** the frusto-conical nozzle sleeve (13) is encircled by an outer sleeve (18) which forms a further coaxial annular gap (17) therewith, and that the two annular gaps (12, 17) are connected to the same or to different sources of fluid.

**10.** Nozzle assembly according to claim 9, **characterised in that** the further annular gap (12) issues into the outlet bore (14) or has a gap mouth (20) separate therefrom and encircling the outlet bore (14) at a distance (19).

**11.** Nozzle assembly according to one of claims 1 to 10, **characterised in that** an annular gap (17) for the formation of an additional gas stream is connected to a bore (21) which issues adjacent to the outlet bore (14).

**12.** Nozzle assembly according to one of claims 1 to 11, **characterised in that** the nozzle sleeve (13) has a vertical slot (22) starting from the annular gap (12) and into which the outlet bore (14) is integrated.

## Revendications

**1.** Dispositif formant buse (34) pour le découpage au laser, comprenant un **corps de buse tronconique (10)** qui est adapté au rayon laser focalisé et entoure celui-ci, et qui comporte un perçage de passage (11) pour le rayon laser, et un **manchon de buse (13)** qui entoure de façon concentrique le corps de buse (10) et définit avec lui un passage annulaire (12), et qui comporte un perçage de sortie (14) situé dans le même axe que le perçage de passage (11), pour un jet de gaz de découpage du passage annulaire (12) relié à une source de gaz, le perçage de sortie (14) étant disposé côté pièce à usiner, devant le perçage de passage (11), et étant pourvu d'un diamètre (D) supérieur au diamètre (d) du perçage de passage (11), **caractérisé** en ce que la section transversale de sortie du perçage de sortie (14) est à peu près égale à la section transversale de la transition entre le passage annulaire (12) et le perçage de sortie (14).

**2.** Dispositif formant buse selon la revendication 1, **caractérisé** en ce que le passage annulaire (12) et la pression gazeuse sont calculés pour que le gaz soit accéléré au maximum jusqu'à la vitesse du son grâce à la surface de section transversale du passage qui va en diminuant en direction du perçage de sortie (14).

**3.** Dispositif formant buse selon la revendication 1 ou 2, **caractérisé** en ce que la section transversale de transition entre le passage annulaire (12) et le perçage de sortie (14) est réduite d'une manière aussi continue que possible grâce à la forme de la paroi (36) du manchon de buse (13).

**4.** Dispositif formant buse selon l'une des revendications 1 à 3, **caractérisé** en ce que la largeur (s) du passage annulaire (12) est calculée de la manière suivante :

$$s = D/(2 \cos(\alpha_s)) * (1-(1-\cos(\alpha_s))^{0.5})$$

s = largeur du passage annulaire
D = diamètre du perçage de passage
$\alpha_s$ = angle d'inclinaison du passage annulaire.

**5.** Dispositif formant buse selon l'une des revendications 1 à 4, **caractérisé** en ce que le perçage de sortie (14) amène le jet de gaz de découpage dans une cavité de buse (37) dont la configuration permet une expansion du jet guidé à une vitesse supersonique.

**6.** Dispositif formant buse selon l'une des revendications 1 à 5, **caractérisé** en ce que le diamètre (d) du perçage de passage (11) est supérieur ou égal à 1,5 fois le diamètre du rayon laser dans la zone du perçage de passage (11).

**7.** Dispositif formant buse selon l'une des revendications 1 à 6, **caractérisé** en ce que l'espace intérieur (16) du corps de buse (10) défini dans la zone d'entrée du rayon laser d'un élément de transmission (15) est pourvu de perçages de décharge de pression (32).

**8.** Dispositif formant buse selon l'une des revendications 1 à 7, **caractérisé** en ce que l'espace intérieur (16) du corps de buse (10) défini dans la zone d'entrée du rayon laser d'un élément de transmission (15) est relié à une source de gaz.

**9.** Dispositif formant buse selon l'une des revendications 1 à 8, **caractérisé** en ce que le manchon de buse tronconique (13) est entouré par un manchon extérieur (18) qui définit avec lui un second passage annulaire coaxial (17), et en ce que les deux passages annulaires (12, 17) sont reliés à la même source de fluide ou à des sources de fluide différentes.

**10.** Dispositif formant buse selon la revendication 9, **caractérisé** en ce que le second passage annulaire (12) débouche dans le perçage de sortie (14) ou comporte un orifice en forme d'interstice (20) séparé de celui-ci, qui entoure le perçage de sortie (14) suivant un écartement (19).

**11.** Dispositif formant buse selon l'une des revendications 1 à 10, **caractérisé** en ce qu'un passage annulaire (17) est relié à un perçage (21) afin de former un jet de gaz supplémentaire, ledit perçage (21) débouchant près du perçage de sortie (14).

**12.** Dispositif formant buse selon l'une des revendications 1 à 11, **caractérisé** en ce que le manchon de buse (13) a une fente verticale (22) qui part du passage annulaire (12) et dans laquelle est intégré le perçage de sortie (14).

FIG. 1

Schneidgaseinlaß

Druckmessung

FIG. 2

FIG. 2a

**Einzelheit Z:**

u: Laufkoordinate
A(u): Strömungsquerschittfläche

Allgemein soll gelten

$\partial A / \partial u \leq 0$

FIG. 2b

FIG. 2c

FIG. 2d

_FIG. 3_

35

28

29

16

34

10

15

29

32

16

34

10

_FIG. 4_

FIG.5

15

Gassorte 1 ⟶          ⟵ Druckmessung 1

30          31

29

Gassorte 2 ⟶          ⟵ Druckmessung 2

25          27

13

$23^1$

Gassorte 1 ⟶          ⟵ Druckmessung 1          $27^1$

Gassorte 2 ⟶          ⟵ Druckmessung 2          $27^2$

$23^2$

17          13

18          12

FIG.6

FIG.7

28  10  23

16

Zentral →

Druckmessung:
Zentral ←

Zusatz →

Druckmessung:
Zusatz ←

23

17

12

20  14  19

FIG.8

28  10  23

16

Schneidgaseinlaß →

Druckmessung ←

33

17

12

14

_FIG. 9_

_FIG. 10_